# NEW EUROPEAN PATENT SPECIFICATION

(11) **EP 0 310 707 B2**
(45) Date of publication and mention of the opposition decision: **22.03.2000**
(45) Mention of the grant of the patent: 23.09.1992
(21) Application number: 87118913.0
(22) Date of filing: 20.12.1987
(51) Int. Cl.: B42D 15/10, B42D 107/00

(54) **Document with magnetically detectable anti-forgery means, and strip with magnetically detectable identification code and identification code**
Dokument mit magnetisch detektierbaren Sicherheitsmitteln und Streifen mit magnetisch detektierbarem Identifikationskode und Identifikationskode
Document avec moyen antifraude détectable magnétiquement et ruban avec code d'identification détectable magnétiquement et code d'identification

(30) Priority: 08.10.1987 IT 2218587
(43) Date of publication of application: 12.04.1989
(73) Proprietor: MANTEGAZZA ANTONIO ARTI GRAFICHE S.r.l., I-20021 Ospiate di Bollate (Milan) (IT)
(72) Inventor: Mantegazza, Antonio, I-20090 Opera (MI) (IT)
(74) Representative: Tiedtke, Harro, Dipl.-Ing.

(56) References cited:
- DE-A- 1 931 536
- DE-A- 2 245 028
- DE-A- 2 328 880
- DE-A- 2 931 043
- DE-C- 1 696 245
- GB-A- 1 095 286
- GB-A- 1 127 043
- GB-A- 1 585 533
- US-A- 2 359 153
- US-A- 3 599 153

## Description

The present invention relates to a document with magnetically detectable anti-forgery means, as well as to a strip with magnetically detectable identification code.

As is known, in banknotes and in other documents a strip is currently used, constituted by a polyester support, on which a layer of detectable metallic material is applied. This strip is currently embedded into the sheet constituting the banknote or document and the detection in practice is limited to establishing the presence or not of said element in the banknote or the like.

In practice the presence of the strip is not capable of providing any information which may allow a greater anti-forgery and/or anti-fraud assurance.

An identification or recognition code is furthermore known which is applied to documents, products, supports and the like, such as for example cheques, which is substantially constituted by spaced bars made with magnetic ink, so that it can be read by a magnetic reading head.

This system, which is commonly termed with the acronym CMC7, is not an anti-forgery element for the user, since it is used only for the automatic management of cheques, since such bars, being visible to the naked eye, may be easily modifiable with ordinary decoloring or abrasive erasure systems and replaceable with other bars so as to produce a forgery.

In practice, with the above described code it occurs that the reading head substantially detects the presence or not of the magnetic region and the width, in the readout direction, of said magnetic region, without being able to create a code which is not modifiable.

GB-A-1 127 043 discloses a method of making security paper which includes the step of incorporating within the paper a thread, planchette or fibre which includes or consists of a ferromagnetic material. Such ferromagnetic material can be in the form of a thread, planchette or fibre manufactured from a non-ferromagnetic base material provided with a coating of ferromagnetic material. The thread can be given a discontinuous coating of ferromagnetic material so that it exhibits discontinuous magnetic properties along its length. Furthermore, bands of different ferromagnetic materials exhibiting differing magnetic properties can be coated onto a sheet or web of base material such that the threads, planchettes or fibres produced therefrom each have a coating containing bands of differing magnetic properties.

GB-A-1 585 533 discloses security devices with magnetic properties which are introduced into security papers. The detection of such security devices can be carried out with detectors which depend upon intrinsic magnetic properties such as permeability, retentivity, hysterisis loss and coercivity or upon special magnetic properties given to the magnetic material in the course of, or subsequent to, the production of the security device such as discontinuities in the magnetic material or coded variations in the magnetisation of the material or variations in the magnetisation of the material which are evident even after uniform re-magnetisation. As a specific example, a 0.02 mms thick ribbon of nickel alloy is coated on both sides with magnetic material. Before or after insertion into security paper, the magnetic layer is sequentially magnetised along its length with opposing fields such that the layer exhibits magnetic flux reversal at each increment of 2 mms along the length.

DE-A-19 31 536 discloses a document with a magnetically detectable anti-forgery means, in which strips randomly provided with magnetic material are embedded. Verification of this document requires an extensive reading of the document and a qualitative comparison with a standard.

DE-A-29 31 043 shows a credit card which comprises a magnetic information carrier having thicker magnetic portions of equal height which differ from each other with respect to form, location and magnetic properties so as to form an anti-forgery means.

DE-A-22 45 028 discloses a credit card having a track which consists of two magnetic materials having different levels of coercitivity. Due to this feature it is possible to magnetically write on the one material at a certain polarity and amperage, whilst the other material is not influenced, and vice versa. After each magnetization it is read what has been written, and the reading is compared with a standard so as to verify the authenticity of the credit card. The materials are preferably applied randomly with variable amount, location and dimension.

US-A-3 599 153 discloses a document, such as a bank-note, on which a portion of an image is printed with magnetic ink. The magnetic ink is deposited with a predetermined variation of the layer thicknesses by an intaglio process. For readout, the magnetic ink is saturated by a constant magnetic field, and then passed under a magnetic reading head which produces as its output a signal having a unique multilevel waveform corresponding to the multilevels of magnetic ink. This unique waveform can then be identified by a comparison with a standard.

DE-C-16 96 245 discloses a method for fabricating a security paper, according to which strips or threads provided with a discontinuous layer of a material having magnetic properties are embedded in the paper.

The object of the present invention is to provide a document with anti-forgery means which allows to have available a considerable number of items of information which can efficiently be verified, whilst avoiding possible doubts in interpreting the readout.

This object is solved by the features set forth in the characterizing portion of the independent claims, respectively.

Advantageously developed embodiments of the invention are subject-matter of the dependent claims

Further characteristics and advantages of the invention will become apparent from the detailed description of a document with magnetically detectable anti-forgery and/or anti-fraud means, as well as to a strip with identification code embeddable in said document, which is illustrated in the accompanying drawings, wherein:
figure 1 is a schematic partially cutout view of a document according to the invention;
figure 2 is a schematic exploded view of the band from which said strips are obtainable;
figure 3 is a highly enlarged longitudinal cross section view of a strip; which is not part of the invention;
figure 4 is a cross section view of a strip with regions of magnetic oxide with diversifiable intensity, obtained by varying the thickness of the layer of each region, applied thereto which is not part of the invention;
figure 5 is a schematic perspective view of a strip with the magnetic oxide regions and the indicative diagram of the detection by the magnetic reading head, pointing out the different amplitudes of the signal, according to the thickness of the layers which is not part of the invention;
figure 6 is a schematic view of a strip, before its masking, with regions of magnetic material with different intensity provided on both faces according to an embodiment of the invention;
figure 7 is a cross section view of the strip according to figure 6, after the masking;

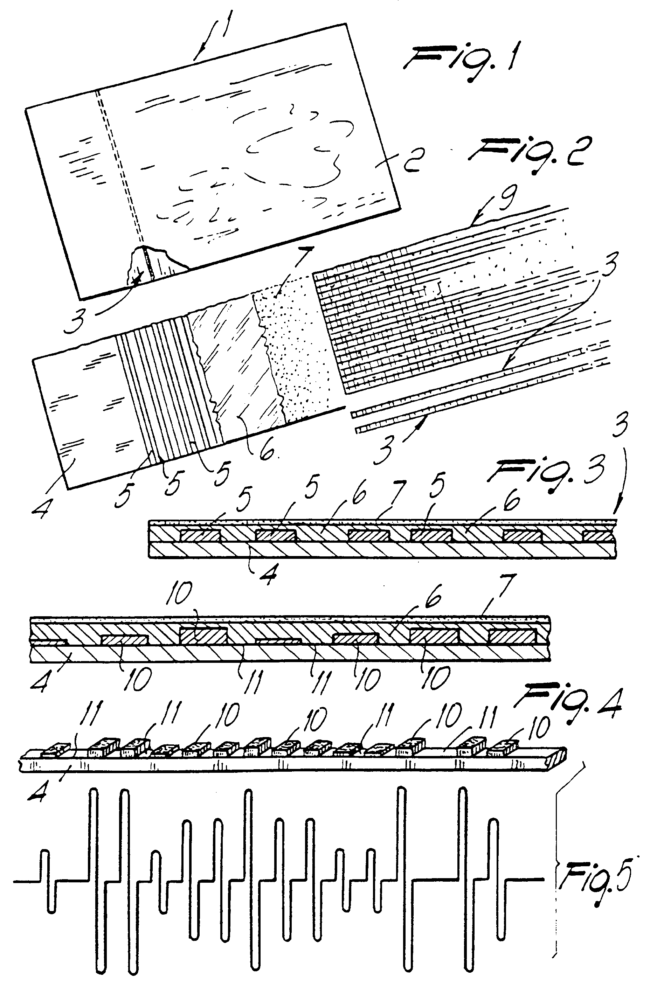

With reference to the above described figures, and in particular to figures 1 to 3, the document with magnetically detectable anti-forgery and/or anti-fraud means which is generally indicated by the reference numeral 1, comprises a plate-like element 2 which can be made with paper-like material or with any other material deemed suitable.

A strip, generally indicated by the reference numeral 3 and illustrated in figure 3, is embedded in the plate-like element and can be applied with the conventional techniques currently used in the application of metallic strips inside watermarked paper for banknotes.

The strip 3 is furthermore provided with a supporting layer 4 made of polyester, on at least one side whereof are deposited spaced magnetic regions 5, obtained by means of a deposition of magnetic iron oxide.

Said regions 5 in practice constitute a bar code which extends for all or part of the length of the strip, offering the possibility of presetting on the strip all the information deemed suitable and which in practice render the forgery of said strip impossible.

In order to prevent the optical detection of the magnetic regions 5, a layer of paint 6 is applied which also has the function of preventing the fraudulent tampering or reproduction of said regions 5.

A layer of heat-melting adhesive material 7 is provided on one face or possibly on both faces of the strip 3 and has the function of integrally coupling the strip 3 to the interior of the plate-like element which embeds it.

The strip 3 has a width which is extremely reduced and can be of the order of a millimeter or even smaller.

In this manner it is possible to have considerable information available, encoded in any way and easily and rapidly detectable and readable by means of a magnetic reading head which analyzes the document.

The strip as illustrated in figure 2 is advantageously obtained starting from a band 9 having great width on which the regions 5 are preset with magnetic oxide deposition, so as to have a possibly industrializable production.

The individual strips 3 are then simply obtained by means of a mechanical cut along the longitudinal direction which separates the band 9 into a plurality of separate strips 3.

In order to further increase the characteristics of anti-forgery security, it is possible to apply a more complicated magnetically detectable code to the strip, so as provide greater information and to make forgery practically impossible.

Said code, as schematically illustrated in figures 4 and 5, has regions of magnetic material, generally indicated by 10, which are mutually spaced by blank clearings 11 and which have a diversifiable magnetic intensity. In the example illustrated in figure 4 and 5 the diversification of magnetic intensity is obtained by varying in practice the thickness of the layer of magnetic oxide which constitutes each region 10.

Substantially, by applying a thickness of magnetic oxide which is variable in the direction perpendicular to the support, in practice the intensity of the detectable magnetic field is varied, so that the reading head, besides being capable of emitting a signal which is a function of the width of the region 10, in the direction of reading, as well as of the width of any blank spaces 11, emits a signal the amplitude whereof is variable as a function of the thickness of the layer.

In practice a new method is introduced, not currently used in the magnetic reading of alphanumeric codes, which is combinable with the other known ones, so as to allow to obtain, the number of elements being equal, a number of combinations effectable with codes of the bar type or of any other type, considerably greater than that normally obtainable.

The thicknesses of the layer are multiples of one another, so as to clearly diversify the reading regions in terms of amplitude, thus allowing the considerable extension of the range of combinations.

Another important advantage, which derives from the use of mutually diversifiable layer thicknesses, resides in the fact that the different thicknesses are not optically detectable, since also in this case a layer of covering paint, again indicated by 6, is applied together with one or two layers of heat-melting adhesive material, again indicated by 7.

As illustrated in figure 5, a readout diagram of the emittable signal is obtained wherein it is possible to easily identify the various levels of the amplitudes of the signal which depend upon the thickness of the layer; as previously mentioned, in order to facilitate the readout mutually multiple layer thicknesses are used, so as to avoid possible doubts in interpreting the readout of the emitted signal.

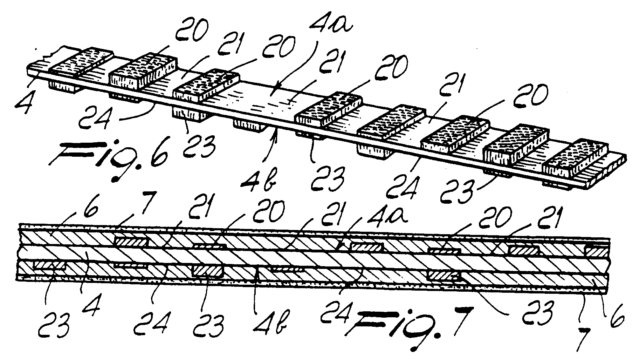

According to the invention in order to further increase the signal range obtainable, without introducing productive difficulties in the diversification of the thicknesses of layers, as illustrated in figures 6 and 7, the magnetic regions are applied both on the face 4a and on the opposite face 4b of the strip polyester support 4.

In practice on the first face 4a a plurality of first regions indicated by 20 is provided, constituted by a layer of magnetic oxide having diversifiable magnetic intensity, which are mutually spaced by first blank regions 21, that is to say by regions in which a layer of magnetic oxide is not provided.

On the other face 4b second regions 23 are provided, also constituted by a layer of magnetic oxide having diversifiable magnetic intensity, spaced by regions 24.

The presence of magnetic oxide or in any case magnetically detectable regions with diversifiable intensity on both the faces of the support 4 leads to considerable advantages, since it allows to significantly increase the number of combinations which are detectable by the magnetic reading head.

In fact, by virtue of the interposition of the support layer, the reading which the magnetic head performs, besides generating a signal the duration whereof is a function of the width of the region in the reading direction and of the blank spaces interposed therebetween, has an amplitude which is a function of the magnetic intensity of the region, as well as of the face of the support on which the magnetic layer region is applied, since the interposition of the support layer creates a variation of distance from the reading head and consequently a variation of the intensity of the detectable magnetic field.

This type of variation provides values of magnetic intensity which are "intermediate" since, the thickness or density of the layer being equal, the signal which is detected is variable depending on the face on which the region is applied, without thereby causing applicative difficulties to obtain said variations of magnetic intensity between the individual regions.

Also in this case a layer of covering paint is applied, again indicated by 6, and so is a layer of heat-melting adhesive 7, which in practice integrally couples the strip once it is introduced into the thickness of the paper or in any case in the material of which the document, product or the like is made, on which the identification code according to the invention is applied.

According to a preferred but naturally non-limitative embodiment, a magnetic ink is used, containing ferromagnetic ferrite and having a solid content of approximately 30% and a viscosity in use assessable at approximately 25 seconds with FORD no. 4 cup.

The thickness of the support and of any covering layers as described above, has a final value assessable at approximately 40 microns.

From what has been described above it can thus be seen that the invention achieves the intended aims and in particular the fact is stressed that the provision of a document in which a strip is insertable having a magnetic code, which in turn can employ, besides the presence or absence of magnetic regions, also the different magnetic intensity of each region, provides a document with a customizable code, since it is possible to have an extremely wide range of alphabets, which can be reserved to each single user, with consequently increased assurance of reliability.

Furthermore the magnetic bar code is applicable with conventional rotogravure or offset printing, which allows to obtain regions with different amounts of magnetic oxide, which thus cause a different response signal, in terms of its amplitude, with the consequent advantage of a considerable increase in the range of obtainable combinations.

The invention thus conceived is susceptible to numerous modifications and variations, all of which are within the scope of the inventive concept.

Moreover all the details may be replaced with other technically equivalent elements.

In practice, the materials employed, so long as compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Document with magnetically detectable anti-forgery means, comprising a plate-like element (2) embedding at least one strip (3) supporting mutually spaced regions (10, 20, 23,) obtained with a deposition of magnetic material, said regions (10, 20, 23,) of magnetic material being readable with a magnetic reading head applicable externally to said plate-like element (2), the document being characterized in that said regions (10, 20, 23,) of magnetic material have a diversifiable magnitude of magnetic intensity due to variations in the amount of said material deposited at said regions (10, 20, 23,), wherein the amounts of magnetic material deposited at said regions (10, 20, 23,) are multiples of the lowest amount, which regions of magnetic material with diversifiable magnitude of magnetic intensity are provided on both faces of a supporting layer (4), and have a thickness of the magnetic layer diversifiable in the direction substantially perpendicular to the plane of arrangement of the supporting layer (4).

2. Document according to claim 1, characterized in that said magnetic material is constituted by magnetic iron oxide.

3. Document according to the preceding claims, characterized in that said regions (10, 20, 23,) of magnetic material are shaped like a bar and spaced by blank spaces (11, 21, 24,).

4. Document according to claim 1, characterized in that it comprises a masking layer (6) applicable on said regions (10, 20, 23,) to hide said regions from view.

5. Document according to one or more of claims 1 to 4, characterized in that it comprises on at least one face of said supporting layer (4) a layer (7) of heat-melting adhesive material.

6. Strip with magnetically detectable identification code, comprising a supporting layer (4) on at least one face (4a, 4b) whereof are provided regions (10, 20, 23,) of mutually spaced magnetic material, said regions (10, 20, 23,) of magnetic material being readable with a magnetic reading head applicable proximate to said strip (3), the strip being characterized in that said regions (10, 20, 23,) of magnetic material have a diversifiable magnitude of magnetic intensity due to variations in the amount of said material provided at said regions (10, 20, 23,), wherein the amounts of magnetic material provided at said regions (10, 20, 23,) are multiples of the lowest amount, said regions (10, 20, 23) with diversifiable magnitude of magnetic intensity are provided on both faces of said supporting layer (4) and have a thickness of the magnetic layer diversifiable in the direction substantially perpendicular to the plane of arrangement of the supporting layer (4).

7. Strip according to the preceding claim, characterized in that it comprises a masking layer (6) applied at least on the portion affected by said regions (10, 20, 23,) to hide from sight said regions (10, 20, 23,) of magnetic material.

8. Strip according to one or more of claims 6 to 7, characterized in that it comprises on at least one face a layer (7) of heat-melting adhesive material.

## Patentansprüche

1. Dokument mit magnetisch detektierbaren Sicherheitsmitteln, umfassend ein plattenartiges Element (2), in das mindestens ein Streifen (3) eingebettet ist, auf dem voneinander beabstandete Bereiche (10, 20, 23) angeordnet sind, die durch Abscheiden eines magnetischen Materials gebildet wurden, wobei die Bereiche (10, 20, 23) aus magnetischem Material mit einem magnetischen Lesekopf lesbar sind, der außen an das plattenartige Element (2) angelegt werden kann, wobei das Dokument **dadurch gekennzeichnet ist, dass** die Bereiche (10, 20, 23) aus magnetischem Material eine variierbare Größe der Magnetfeldstärke besitzen aufgrund von Schwankungen in der Menge des auf die Bereiche (10, 20, 23) abgeschiedenen Materials, wobei die Menge an magnetischem Material, das in den Bereichen (10, 20, 23) abgeschieden wurde, ein Vielfaches der geringsten Menge ist, die Bereiche (10, 20, 23) aus magnetischem Material mit variierbarer Größe der Magnetfeldstärke auf beiden Seiten der Trägerschicht (4) vorgesehen sind und eine Dicke der magnetischen Schicht besitzen, die in der Richtung variierbar ist, die im wesentlichen senkrecht ist zur Anordnungsebene der Trägerschicht (4).

2. Dokument nach Anspruch 1, **dadurch gekennzeichnet, dass** das magnetische Material aus magnetischem Eisenoxid besteht.

3. Dokument nach den vorhergehenden Ansprüchen, **dadurch gekennzeichnet, dass** die Bereiche (10, 20, 23) aus magnetischem Material stabförmig ausgebildet sind und durch freie Zwischenräume (11, 21, 24) voneinander beabstandet sind.

4. Dokument nach Anspruch 1, **dadurch gekennzeichnet, dass** es eine Maskierungsschicht (6) aufweist, die auf die Bereiche (10, 20, 23) aufgebracht werden kann, um diese Bereiche zu verdecken.

5. Dokument nach einem oder mehreren der Ansprüche 1 bis 4, **dadurch gekennzeichnet, dass** es auf mindestens einer Seite der Trägerschicht (4) eine Schicht (7) aus heißschmelzendem Klebstoff umfasst.

6. Streifen mit magnetisch detektierbarem Identifikationscode, umfassend eine Trägerschicht (4), wo auf mindestens einer Seite (4a, 4b) voneinander beabstandete Bereiche (10, 20, 23) aus magnetischem Material vorgesehen sind, wobei die Bereiche (10, 20, 23) aus magnetischem Material mit einem magnetischen Lesekopf lesbar sind, der in der Nähe des Streifens (3) angelegt werden kann, wobei der Streifen **dadurch gekennzeichnet ist, dass** die Bereiche (10, 20, 23) aus magnetischem Material eine variierbare Größe der Magnetfeldstärke besitzen aufgrund der Schwankungen in der Menge des auf die Bereiche (10, 20, 23) aufgetragenen Materials, wobei die Menge an magnetischem Material, das in den Bereichen (10, 20, 23) abgeschieden wurde, ein Vielfaches der geringsten Menge ist, die Bereiche (10, 20, 23) aus magnetischem Material mit variierbarer Größe der Magnetfeldstärke auf beiden Seiten der Trägerschicht (4) vorgesehen sind und eine Dicke der magnetischen Schicht besitzen, die in der Richtung variierbar ist, die im wesentlichen senkrecht ist zur Anordnungsebene der Trägerschicht (4).

7. Streifen nach dem vorhergehenden Anspruch**, dadurch gekennzeichnet, dass** er eine Maskierungsschicht (6) aufweist, die mindestens auf den Abschnitt aufgebracht ist, der mit den Bereichen (10, 20, 23) versehen ist, um die Bereiche (10, 20, 23) aus magnetischem Material zu verdecken.

8. Streifen nach einem oder mehreren der Ansprüche 6 bis 7, **dadurch gekennzeichnet, dass** er auf mindestens einer Seite eine Schicht (7) aus heißschmelzendem Klebstoff aufweist.

## Revendications

1. Document comportant des moyens anti-falsification détectables magnétiquement, comportant un élément (2) en forme de plaque incorporant au moins une bande (3) supportant des régions (10, 20, 23) mutuellement espacées obtenues par un dépôt de matériau magnétique, lesdites régions (10, 20, 23) constituées du matériau magnétique pouvant être lues par une tête de lecture magnétique applicable à l'extérieur dudit élément (2) en forme de plaque, le document étant caractérisé en ce que lesdites régions (10, 20, 23) constituées du matériau magnétique génèrent une champ magnétique d'intensité variable grâce à des variations de la quantité dudit matériau déposé au niveau desdites régions (10, 20, 23), les quantités de matériau magnétique déposé au niveau desdites régions (10, 20, 23) étant des multiples de la quantité minimale, les régions constituées du matériau magnétique générant un champ magnétique d'intensité variable se situant sur les deux faces d'une couche de support (4), et l'épaisseur de la couche magnétique pouvant varier dans une direction à peu près perpendiculaire au plan d'agencement de la couche de support (4).

2. Document selon la revendication 1, caractérisé en ce que ledit matériau magnétique se constitue d'un oxyde de fer magnétique.

3. Document selon l'une quelconque des revendications précédentes, caractérisé en ce que lesdites régions (10, 20, 23) constituées du matériau magnétique se présentent sous la forme d'une barre et sont séparées par des espaces vierges (11, 21, 24).

4. Document selon la revendication 1, caractérisé en ce qu'il comporte une couche de masquage (6) applicable sur lesdites régions (10, 20, 23) pour empêcher de voir lesdites régions.

5. Document selon l'une quelconque des revendications 1 à 4, caractérisé en ce qu'il comporte, sur au moins une face de ladite couche de support (4), une couche (7) constituée d'un matériau adhésif thermofusible.

6. Bande comportant un code d'identification magnétiquement détectable, comportant une couche de support (4) sur au moins une face (4a, 4b) de laquelle sont formées des régions (10, 20, 23) constituées d'un matériau magnétique, mutuellement espacées, lesdites régions (10, 20, 23) constituées du matériau magnétique pouvant être lues par une tête de lecture magnétique applicable à proximité de ladite bande (3), la bande étant caractérisée en ce que lesdites régions (10, 20, 23) constituées du matériau magnétique génèrent un champ magnétique d'intensité variable grâce à des variations de la quantité dudit matériau agencé au niveau desdites régions (10, 20, 23), les quantités de matériau magnétique agencé au niveau desdites régions (10, 20, 23) étant des multiples de la quantité minimale, lesdites régions (10, 20, 23) générant un champ magnétique d'intensité variable sont agencées sur les deux faces de ladite couche de support (4), et l'épaisseur de la couche magnétique peut varier dans une direction à peu près perpendiculaire au plan d'agencement de la couche de support (4).

7. Bande selon la revendication précédente, caractérisée en ce qu'elle comporte une couche de masquage (6) appliquée au moins sur la partie affectée par lesdites régions (10, 20, 23) afin d'empêcher de voir lesdites régions (10, 20, 23) constituées du matériau magnétique.

8. Bande selon la revendication 6 ou 7, caractérisée en ce qu'elle comporte, sur au moins une face, une couche (7) constituée d'un matériau adhésif thermofusible.
